# EUROPÄISCHE PATENTSCHRIFT

(11) **EP 1 432 771 B1**
(45) Veröffentlichungstag und Bekanntmachung des Hinweises auf die Patenterteilung: **24.06.2009**
(21) Anmeldenummer: 02774572.8
(22) Anmeldetag: 06.09.2002
(51) Int. Cl.: C09D 163/10, C09D 175/16

(54) **UV-HÄRTENDE ANTI-FINGERPRINT BESCHICHTUNGEN**
UV-HARDENING ANTI-FINGERPRINT COATINGS
REVETEMENTS ANTI-EMPREINTES DIGITALES DURCISSANT AUX UV

(30) Priorität: 11.09.2001 DE 10144531
(43) Veröffentlichungstag der Anmeldung: 30.06.2004
(73) Patentinhaber: Henkel AG & Co. KGaA, 40589 Düsseldorf (DE)
(72) Erfinder: HACKBARTH, Karsten, 40237 Düsseldorf (DE); KOCH, Matthias, 40597 Düsseldorf (DE); MOTZKAT, Kerstin, 46049 Oberhausen (DE); SANDER, Jörg, 42549 Velbert (DE); ENDRES, Holger, 41470 Neuss (DE); SCHNEIDER, Wolfgang, 40764 Langenfeld (DE)
(86) Internationale Anmeldenummer: PCT/EP2002/009967
(87) Internationale Veröffentlichungsnummer: WO 2003/022945

(56) Entgegenhaltungen:
- EP-A- 1 277 815
- US-A- 4 544 625
- PATENT ABSTRACTS OF JAPAN vol. 017, no. 052 (C-1022), 2. Februar 1993 (1993-02-02) & JP 04 264167 A (DAINIPPON INK & CHEM INC), 18. September 1992 (1992-09-18)

## Beschreibung

Die vorliegende Erfindung betrifft ein Verfahren zur Herstellung von Schmutz abweisenden Funktionsbeschichtungen für Metalloberflächen insbesondere Aluminium- oder Edelstahloberflächen sowie dafür geeignete Beschichtungsmittel.

Im Haushalt, im Sanitärbereich, im Klinikbereich sowie in der Lebensmittel verarbeitenden und der pharmazeutischen Industrie werden eine Vielzahl von Apparaten, Geräten und Maschinen aus Metall, insbesondere Edelstahl oder Aluminium, eingesetzt. Wegen seiner hohen Korrosionsbeständigkeit wird dabei z.B. Edelstahl bevorzugt verwendet. Häufig wird dieser oberflächlich poliert oder gebürstet und ohne zusätzliche Beschichtungen eingesetzt. Weiterhin werden auch im Architekturbereich, beim Innenausbau von Gebäuden, im Möbelbau sowie bei Schmuckanwendungen eine Vielzahl metallischer Teile der unterschiedlichsten Zusammensetzungen eingesetzt. Dabei wird auch in diesen Fällen die metallische Oberfläche häufig poliert, gebürstet oder anderweitig mit Oberflächenmustern versehen und ohne Aufbringung weiterer Beschichtungen eingesetzt.

In dieser Form ist die Metalloberfläche sehr anfällig gegenüber Anschmutzungen durch Staub, Lebens- und Reinigungsmittel oder durch Fingerabdrücke ("fingerprints"). Zur Verbesserung der Kratzfestigkeit der Oberfläche bzw. zum Vermeiden von Anschmutzungen sind bereits eine Reihe von Oberflächenbehandlungen von Metallen vorgeschlagen worden. Hierbei handelt es sich sowohl um Lackierverfahren mit lösungsmittelbasierten und mit wässrigen Systemen, z.B. mit wässrigen elektrophoretisch abscheidbaren Tauchlacken, oder um Pulverbeschichtungen. Diese Beschichtungen sollen das Anschmutzverhalten sowie die Kratzfestigkeit der Oberfläche verbessern. Nachteile der Verfahren sind z.B. die Aushärtungsbedingungen wie Zeit, Temperatur sowie die daraus sich ergebenden Anlagenabmessungen. Außerdem sind Verformungen der Gegenstände häufig nicht möglich, ohne die Oberflächenbeschichtung zu zerstören.

Die DE 199 57 325 und die DE 199 52 323 beschreiben Beschichtungsmittel für Metalle oder Kunststoffe, die thermisch härtend sind und auf wässrigen Solen aus Silizium-organischen Verbindungen basieren. Die EP 1 036 829 behandelt UVvernetzbare Beschichtungsmittel für Metalle und leitfähige Kunststoffe, beschreibt jedoch nur wässrige Systeme, die auf elektrisch leitenden Substraten durch Elektrotauchlackierung aufgetragen und anschließend zunächst bei erhöhter Temperatur getrocknet, danach unter UV-Licht nachvernetzt werden.

Die JP-A-07/171496 und JP-A-04/150976 (1992) beschreiben thermisch härtende Überzüge auf Edelstahl, die aus Polyesterharzen und Silikat- bzw. Melaminharz erzeugt werden. Die JP 2000/063440 (JP 1998/0228446/AP), und EP-0 789 065 beschreiben spezielle UVvernetzende Lacksysteme im wesentlichen zur Holzbeschichtung, die in Schichten oberhalb von 20 oder 30 µm aufgetragen werden.

Obwohl also zu UV-vernetzenden Beschichtungsmitteln ein umfangreicher Stand der Technik existiert, ist das Problem der Beschichtung mit dünnen Schichtdicken zur Vermeidung von Anschmutzungen von Metall oder auch Kunststoffsubstraten noch nicht gelöst. Dabei soll ein gutes Schmutz abweisendes Verhalten und die Kratzfestigkeit der beschichteten Oberfläche gegeben sein, außerdem soll die natürliche Optik insbesondere von gebürsteten oder anderweitig strukturierten Metalloberflächen erhalten bleiben. Über diese Erfordernisse werden im Stand der Technik keine Ausführungen gemacht. Weiterhin ist ein Energie sparendes, schnelles und Umwelt schonendes Verfahren zum Beschichten gefordert, um auch große Oberflächen wirtschaftlich beschichten zu können. Eine weitere Anforderung ist es, die beschichteten Gegenstände verformen zu können, ohne dass die Beschichtung beeinträchtigt wird. Es bestand also die Aufgabe, für diese Zwecke ein lösemittelfreies, dünnes Beschichtungssystem zur Verfügung zu stellen, das eine hohe Kratzfestigkeit und chemische Beständigkeit gegen alkalische und saure Reiniger aufweist, wie sie im Haushalts- und Gewerbebereich oder in der lebensmittelverarbeitenden Industrie eingesetzt werden.

Die erfindungsgemäße Lösung der Aufgabe wird dadurch erreicht, dass ein durch energiereiche Strahlung vernetzendes lösemittelfreies flüssiges Überzugsmittel zur Verfügung gestellt wird, das in einem Temperaturbereich von 0 bis 90°C, bevorzugt 15 bis 70°C, eine Viskosität kleiner als 1000 mPas aufweist, enthaltend
a) 40 bis 90 Gew.-% mindestens eines oligomeren, linearen oder verzweigten Epoxy- Polyester-, Polyether- und /oder Urethan(meth)acrylats ,
b) 5 bis 60 Gew.-%, vorzugsweise 16 -bis 60 Gew.-%, mindestens einer monofunktionellen flüssigen (Meth)acrylat- oder Di-, Tri- oder Poly(Meth) acrylatverbindung, und
c) 0,1 bis 20 Gew.-% saure Gruppen enthaltende Methacrylatverbindungen,
d) gegebenfalls 0 bis 30 Gew.-% eines weitere funktionelle Gruppen enthaltenden Di- oder Tri-Alkoxysilans,
e) 0,1 bis 20 Gew% lacktechnische Hilfsstoffe wie Haftvermittler, Verlaufsmittel, Entschäumer und / oder Lichtschutzmittel sowie Fotoinitiatoren.

Das erfindungsgemäße Überzugsmittel wird bevorzugt verwendet als Beschichtungsmittel von metallischen Oberflächen mit dünnen hydrolysefesten, reinigungsfesten und kratzfesten Beschichtungen. Ein weiterer Gegenstand betrifft die Verwendung des erfindungsgemäßen Überzugsmittels, wobei das Überzugsmittel anti-bakteriell ausgerüstet ist.

Ein weiterer Gegenstand der Erfindung betrifft ein Verfahren zum Beschichten von metallischen Oberflächen, wobei das Substrat gegebenenfalls zuerst gereinigt und entfettet, danach das erfindungsgemäße Überzugsmittel in einer Schichtstärke von 0,5 bis 20 µm aufgetragen, und schließlich der Überzug mittels energiereicher Strahlung vernetzt wird. Ein weiterer Gegenstand der Erfindung besteht in einem Verfahren zur Beschichtung von solchen Oberflächen, bei dem die beschichtete Oberfläche vor dem Vernetzungsschritt mit einer abziehbaren, folienförmigen Schutzschicht versehen wird.

Das erfindungsgemäße Verfahren und das erfindungsgemäße Überzugsmittel sind insbesondere zur Verwendung für Oberflächen aus Eisenwerkstoffen, Stahl und legiertem Stahl, Leichtmetallen wie Aluminium, Magnesium, Titan, Buntmetallen, wie Kupfer, Zink, Zinn oder Edelmetallen, wie Gold, Silber, oder deren Legierungen geeignet. Dabei kann diese Oberfläche geschliffen, gebürstet, poliert, elektrochemisch behandelt oder elektrolytisch beschichtet, z.B. cadmiert, verchromt oder vernickelt sein. Auch metallisierte Kunststoffoberflächen sind geeignet. Das Substrat kann eine beliebige Form aufweisen, es liegt jedoch bevorzugt in Form von Platten, Bändern oder Rollen vor.

Die erfindungsgemäßen Überzugsmittel enthalten polymerisierbare, ungesättigte Doppelbindungen enthaltende Oligomere, wie beispielsweise Polyester- oder Polyetheroligomere mit seitenständigen oder endständigen (Meth)acrylgruppen, oder bevorzugt (Meth)acrylat-funktionelle aliphatische, cycloaliphatische und/oder aromatische Epoxidverbindungen oder Polyurethanoligomeren mit reaktiven (Meth)acrylatgruppen. Diese Oligomere sollen mindestens zwei funktionelle ungesättigte Doppelbindungen aufweisen und haben im allgemeinen ein Molekulargewicht zwischen 500 und 15000. Sie sind kommerziell erhältlich. Die Menge beträgt 40 bis 90, insbesondere 45 bis 85 Gew.%, wobei auch Gemische verschiedener Oligomere möglich sind.

Weiterhin sollen in dem Überzugsmittel mindestens ein mono-, di-, tri- oder polyfunktionelles ungesättigtes niedermolekulares (Meth)acrylat enthalten sein, wobei einzelne Verbindungen oder Gemische vorliegen können. Beispiele für solche Verbindungen sind: ggf. alkoxylierte Alkandiol- oder Alkantriol(meth)acrylate wie 1,3-Butylenglykoldi(meth)acrylat, 1,4-Butandioldi(meth)acrylat, 1,6-Hexandioldi(meth)acrylat, Trialkylenglykoldi(meth)acrylat, Polyalkylenglykoldi(meth)acrylat, Tetraalkylenglykoldi(meth)acrylat, Neopentylglykoldi(meth)acrylat, Glycerinalkoxy tri(meth)acrylat, alkoxyliertes Neopentylglykoldi(meth)acrylat; (Meth)acryl-Epoxidverbindungen, wie Bisphenol-A-Epoxid-di(meth)acrylat; Polyhydroxy(meth) acrylate wie Pentaerythritoltri(meth)acrylat, Trimethylolpropantri(meth)acrylat, Trisalkoxy-Trimethylolpropantri(meth)acrylat, Di-trimethylolpropantetra(meth) acrylat, Penta erythritoltetra(meth)acrylat, Tris-(2-hydroxyalkyl)isocyanurattri(meth)acrylat, Dipentaeythritoltetra(meth)acrylat, Dipentaerythritolpenta(meth) acrylat, Dipentaerythritolhexa(meth)acrylat, wobei alkylen ethylen, propylen oder butylen und alkoxy, ethoxy, 1,2- oder 1,3-propoxy oder 1,4-butoxy bedeuten.

Als monofunktionelle Acrylatverbindungen können beispielsweise die folgenden (Meth)acrylate verwendet werden: lineare, verzweigte oder cyclische Alkyl (meth)acrylate wie n-/iso-Alkyl(meth)acrytat, Cyclohexyl(meth)acrylat, 4-tert.-Butyl cyclohexyl(meth)acrylat, Dihydrocyclopentadienyl(meth)acrylat, Tetrahydrofurfuryl (meth)acrylat, Isobornyl(meth)acrylat, Allyl(meth)acrylat, Mono(meth)acryloylalkyl phthalat, -succinat oder -maleinat; Alkandiolmono(meth)acrylate, wie Hydroxypropyl(meth)acrylat, Polyalkylenglykol(meth)acrylat, Monoalkoxytrialkylenglykol-(meth)acrylat, 2,3-Epoxypropyl(meth)acrylat; aromatische (Meth)acrylate wie Nonylphenol(meth)acrylat, 2-Phenoxyalkyl(meth)acrylat; Acrylamide wie N,N-Dialkyl(meth)acrylamid, N,N-Dialkylaminoalkyl(meth)acrylamid. Weiterhin sind auch anteilsweise Vinylether einsetzbar, wie z.B. Vinylethylether, Vinylpropylether, Vinylisobutylether, Vinyldodecylether, Butandiol-1,4-divinylether, Diethylenglykoldivinylether, Hydroxybutylvinylether. Die monomeren Acrylatverbindungen können einzeln oder als Gemisch vorliegen, wobei die Gesamtmenge zwischen 5 bis 60 insbesondere zwischen 15 bis 50 Gew.-% betragen soll.

Weiterhin können die Überzugsmittel auch Di- oder Tri-Alkoxysilane mit weiteren organofunktionellen Gruppen enthalten. Beispiele dafür sind Aminopropyltrialkoxysilan Bis-(trialkoxysilylpropyl)amin, Hydroxyethyltrialkoxysilan, Carboxypropyltrialkoxysilan, Vinyltrialkoxysilan wobei alkoxy jeweils für methoxy, ethoxy, propoxy oder butoxy steht. Die Menge soll vorzugsweise zwischen 0 bis 15 Gew.-% betragen.

Bevorzugt sollen die Überzugsmittel saure Gruppen aufweisende (Meth)-acrylatverbindungen enthalten, die eine, zwei oder mehrere (Meth)acrylgruppen aufweisen und zusätzlich saure funktionelle Reste enthalten. Die Menge dieser Komponente soll zwischen 0,1 und 20 Gew.-% liegen, bevorzugt zwischen 0,5 und 10 Gew.-%. Beispiele für solche sauren funktionellen Gruppen sind Carboxylgruppen, Phosphor- oder Phosphonsäuregruppen, Sulfonsäuregruppen sowie deren Derivate, wie z.B. Ester. Insbesonders phosphorsaure Gruppen sind bevorzugt.

Als Fotoinitiatoren können die bekannten bevorzugt radikalischen Initiatoren eingesetzt werden, wie beispielsweise 2-Benzyl-dimethylamino-1-(4-morpholinophenyl)-butanon-1, Dimethoxyphenylacetophenon, α-Hydroxybenzylphenylketon, 1-Hydroxy-1-methylethyl-phenylketon, Oligo-2-Hydroxy-2-methyl-1-(4-(1-methylvinyl)phenyl)propanon, Benzophenon, Methylorthobenzoylbenzoat, Methylbenzoylformat, 2,2-Diethoxyacetophenon, 2,2-di-sec. Butoxyacetophenon, p-Phenylbenzophenon, 2-Isopropylthioxanthon, 2-Methylanthrachinon, 2-Ethylanthrachinon, 2-Chloranthrachinon, 1,2-Benzanthrachinon, Benzil, Benzoin, Benzoinmethylether, Benzoinisopropylether, α-Phenylbenzoin, Thioxanthon, Diethylthioxanthon, 1,5-Acetonaphthalin, 1-Hydroxycyclohexylphenylketon, Ethyl-p-dimethylaminobenzoat. Diese können einzeln oder im Gemisch verwendet werden oder mit weiteren Radikalinitiatoren vom Peroxidtyp oder aminischen Beschleunigern kombiniert werden.

Neben den vorgenannten Bindemitteln enthält das erfindungsgemäße Überzugsmittel noch geringe Mengen von Additive, die beispielsweise Verlaufseigenschaften, Filmbildung, Haftung oder Beständigkeit der Überzugsmittel vorteilhaft beeinflussen. Beispiele hierfür sind Verlaufsmittel, wie fluorierte Polysiliconglykole, Silikonglykole, Polyether-Polysiloxancopolymere. Als Lichtschutzmittel können die bekannten Mittel auf Basis von sterisch gehinderten Aminoverbindungen eingesetzt werden.

Weiterhin können Farbstoffe, optische Aufheller und/oder Pigmente als Additive im Überzugsmittel enthalten sein. Farbstoffe sind solche auf Basis organischer Farbstoffe, die im Überzugsmittel löslich sind. Diese bilden nach dem Aushärten des Films gefärbte transparente Überzüge und können zusammen mit der Substratoberfläche spezielle optische Effekte hervorrufen. Optische Aufheller sind solche Verbindungen, die UV-Strahlung absorbieren und im sichtbaren Licht wieder abstrahlen, beispielsweise ausgewählt aus den Triazinderivaten. Unter Pigmenten werden organische oder anorganische bunte oder unbunte Pigmentzubereitungen verstanden, wie Eisenoxidpigmente, Titandioxidpigmente, Ruß, Chinacrydon- oder Phthalocyaninpigmente. Diese müssen homogen im Überzugsmittel verteilt sein. Dabei muss die Teilchengröße wesentlich unterhalb der beabsichtigten Schichtdicke liegen, bevorzugt unterhalb von 1 µm. Es kann vorteilhaft sein diese Bestandteile in Anteilen der flüssigen Acrylatverbindungen vor der Zugabe zum Überzugsmittel zu dispergieren.

Weiterhin können auch mikronisierte Füllstoffe wie z.B. Kieselsäure, Aluminiumoxid, Titandioxid oder Bariumsulfat eingesetzt werden. Diese sind weiß, farblos oder opak/transparent und werden in feindispergierter Form eingesetzt. Sie können je nach Menge und Typ die Oberflächenhärte, Struktur und Kratzfestigkeit der Beschichtung beeinflussen. Die Menge der Hilfsstoffe (einschließlich der Pigmente oder Füllstoffe) soll zwischen 0,1 bis 20 Gew.-% betragen, bevorzugt 0,5 bis 15 Gew.-%.

Darüber hinaus können in einer bevorzugten Ausführungsform antibakteriell oder biozid wirkende Verbindungen im Überzugsmittel enthalten sein. Es handelt sich dabei beispielsweise um organische Substanzen, wie Bioguanidine, substituierte Benzalkoniumhalogenide, Alkyl-Polyvinylpyridine, Betaine oder um anorganische Verbindungen, wie Silbersalze oder feinverteilte Silberpartikel im Teilchengrößenbereich von wenigen nm. Die Menge soll 0,1 bis 5 Gew.-% betragen. Sie ist von der Wirksamkeit der eingesetzten Substanz abhängig. Diese Verbindungen werden im Überzugsmittel eingearbeitet und bei der Vernetzungsreaktion nicht zerstört. Sie führen zu langfristig antibakteriell wirkenden Oberflächen.

Die Bestandteile des erfindungsgemäßen Überzugsmittels können nach bekannten Verfahren gemischt werden. Dabei kann es zweckmäßig sein feste Komponenten in niedrigviskosen Komponenten zu lösen oder z. B. bei Pigmenten zu dispergieren. Um eine Lagerstabilität sicherzustellen kann es bei speziellen reaktiven Bestandteilen günstig sein, diese in niedrigviskosen Komponenten vor der Zugabe zum Überzugsmittel vorzumischen und eine mögliche Reaktion zu begrenzen.

Das erfindungsgemäße Verfahren kann für die im Verfahren zu beschichtenden Gegenstände angepasst werden. Je nach dem Bearbeitungszustand wird das Substrat einem Reinigungsschritt unterworfen, der im Tauchen, Spritzen, Hochdruck- oder Injektionsspritzen oder mit Unterstützung von Ultraschall oder Elektrolyse durchgeführt werden kann. Dabei werden Staubpartikel, Oxidschichten, anhaftende Rückstände oder fettige/ölige Substanzen aus dem Herstellverfahren entfernt. Zur Reinigung können die bekannten, bevorzugt wässrigen Reinigungsmittel eingesetzt werden. Nach der Reinigung wird die Oberfläche mit Wasser gespült, getrocknet und dann unmittelbar weiterverarbeitet. Bevorzugt wird vor der Beschichtung mit dem erfindungsgemäßen Überzugmittel keine weitere Vorbehandlung durchgeführt, insbesondere kein Primer aufgetragen.

Das Substrat kann mit der bekannten Applikationsmethoden mit dem Überzugsmittel versehen werden. Werden geformte oder profilierte Teile beschichtet, sind vorzugsweise die in der Lackiertechnik gebräuchlichen Spritzsysteme wie z.B. airless, air-assisted oder elektrostratisch unterstützte Spritzverfahren geeignet, oder auch der manuelle Pinselauftrag. In besonders bevorzugter Weise wird das Beschichtungsmittel auf eine ebene Werkstück- bzw. Metallbandoberfläche durch Fluten/Abquetschen, Spritzen/Abquetschen, geeignete Abstreifer- oder Walzapplikationen aufgebracht. Dabei soll die Viskosität des Überzugsmittels bei der Applikation, in einer Temperatur zwischen 15 bis 75°C, unterhalb von 1000 mPas, bevorzugt unter 300 mPas liegen (gemessen im Kegel-Platte-Viskosimeter).

Die Schichtdicke des Überzugsmittels beträgt im allgemeinen 0,5 bis 20 µm, insbesondere 1 bis 10 µm, besonders bevorzugt bis zu 5 µm.

Die Applikation des Überzugsmittels geschieht im allgemeinen bei Temperaturen zwischen 0 und 90°C, bevorzugt 15 und 70°C. Danach wird der Überzug durch energiereiche Strahlung, wie zum Beispiel UV-Strahlung, Elektronenstrahlung oder γ-Strahlung vernetzt. Die Elektronenstrahlung soll Energiewerte zwischen 150 und 350 keV aufweisen. Bevorzugt ist eine Vernetzung durch UV-Strahlung, insbesondere mit einer Wellenlänge von 150 bis zu 800 nm, besonders bevorzugt zwischen 200 und 450 nm. Entsprechende Strahlungsquellen sind dem Fachmann bekannt. Die Strahlungsintensität und die Dauer der Bestrahlung hängen von den Verfahrensbedingungen ab, z.B. Abstand der Strahlungsquelle oder relative Bewegung zwischen Quelle und Substrat. Die Dauer liegt jedoch im allgemeinen unter 60 sec, bevorzugt zwischen 0,001 und 30 sec. Die jeweiligen Anlagenparameter können vom Fachmann durch einfache Anpassung bestimmt werden.

In einer besonderen Verfahrensausführung kann der Anteil an Sauerstoff in der Zone oberhalb des zu vernetzenden Substrats reduziert werden. Hierbei soll er insbesondere unterhalb von 3000 ppm liegen, bevorzugt unter 1000 ppm. Das kann beispielsweise durch teilweisen oder vollständigen Austausch der in der Vernetzungszone vorhandenen Umgebungsluft durch inerte Gase geschehen, z.B. Argon, Stickstoff, CO₂ oder Gemische davon. Ein Vorteil dieser Verfahrensausführung liegt darin, dass die benötigte Konzentration an Fotoinitiator im Überzugsmittel verringert werden kann.

Eine weitere Ausführungsform der Erfindung umfasst den zusätzlichen Schritt, dass nach dem Auftragen des Überzugsmittels zunächst eine für die verwendete energiereiche Strahlung durchlässige Folie auf das Substrat aufgebracht wird. Es ist möglich, räumlich geformte Substrate mit einer solchen Folie zu versehen, jedoch ist es bevorzugt, dass das Substrat als Platte oder Band vorliegt. Bevorzugt wird ein maschinelles Auftragsverfahren durchgeführt. Dabei kann beispielsweise die reißfeste Folie von einer Vorratsrolle abgezogen und mittels einer Walze blasenfrei auf die Substratoberfläche aufgetragen werden. Nach diesem Verfahrensschritt wird das Überzugsmittel unter der Folie durch Strahlung vernetzt. Ein Vorteil dieses Verfahrens liegt darin, dass unter der Folie die Aushärtung unter inerten Bedingungen erfolgt, d.h. insbesondere unter Sauerstoffausschluss.

Die Folie besteht beispielsweise aus Polyethylen, Polypropylen, PET oder Gemischen davon. Sie ist gefärbt oder bevorzugt transparent. Die Folie soll nicht mit dem Überzugsmittel reagieren. Sie ist reißfest, so dass sie in einem späteren Verarbeitungsschritt durch Abziehen von der Substratoberfläche entfernt werden kann. Das kann auch beim Endverbraucher geschehen, so dass die Folie als Schutz für den Gegenstand bei Weiterverarbeitung und/oder Transport dienen kann.

Die Verwendung der erfindungsgemäßen Überzugsmittel führt zu beschichteten Substraten, insbesondere metallischer Art, die eine dünne Oberflächenbeschichtung aufweisen. Dabei sind spezielle optische Effekte zu erzielen, wie z.B. Metallglanz, Mattierungen, Strukturen oder Färbungen. Bevorzugte Verwendungen der erfindungsgemäß beschichteten Gegenstände sind dabei im Architekturbereich, beim Innenausbau von Gebäuden oder im Möbelbau verwendete Metallbleche, Metallteile oder profilierte Metalle sowie metallische Schmuckstücke. Insbesondere können die erfindungsgemäß beschichteten metallischen Werkstücke für die Herstellung von Maschinen, Gegenständen oder Geräten für den Haushaltsbereich, den Sanitärbereich, den Klinikbereich sowie für die Lebensmittel verarbeitende oder pharmazeutische Industrie verwendet werden. Für die letztgenannten Bereiche findet hauptsächlich Edelstahl Verwendung.

Die erfindungsgemäßen Beschichtungen weisen gute Beständigkeit und Verschmutzungsresistenz gegen eine Vielzahl von Agenzien auf, wie sie z.B. im Haushaltsbereich oder in der Lebensmittelindustrie vorkommen, wie schwarzer Tee, schwarze Tinte, Kondensmilch, Fruchtsäfte, Essig, Senf, Ketchup, Mayonnaise, Zwiebel, Zucker und Zuckercouleur. Die bei unbeschichteten Metalloberflächen verbleibenden fingerprints hinterlassen bei erfindungsgemäß beschichtetem Metall keine bleibenden Spuren, sondern können leicht entfernt werden. Insbesondere sind die Überzüge auch gegen saure und alkalische Reinigungsmittel wie z.B. Spülmittel, sogenannte "Stahl-Glanz"- oder Allzweckreiniger bei Temperaturen bis zu 60°C stabil. Dabei bleibt die visuelle Erscheinung der Oberfläche vollständig erhalten.

Anhand der nachfolgenden Ausführungsbeispiele soll die Erfindung näher erläutert werden, wobei die Auswahl der Beispiele keine Beschränkung des Umfanges des Erfindungsgegenstandes darstellt. Sofern nicht anders angegeben, sind alle Mengenangaben in den nachfolgenden Beispielen Gewichtsprozent bzw. Gewichtsteile bezogen auf die gesamte Zusammensetzung.

### Beispiele

Bei den nachfolgenden Beschichtungen gemäß vorliegender Erfindung wurden für die Beispiele 1-9 gebürstete Edelstahlbleche verwendet. Alle Substrate wurden vor der Beschichtung mit einem wässrigen, leicht alkalischen Reiniger entfettet und anschließend getrocknet. Die Komponenten des erfindungsgemäßen Überzugsmittels wurden durch intensives Mischen in schnell laufenden Rührern homogenisiert. Das Überzugsmittel wurde mittels eines Rollcoaters oder Rakels mit einem Schichtgewicht < 5 g/m2 appliziert und unter Normalatmosphäre mit UV-Strahlung ( Strahlertyp Fusion VPS/I 600, H-Strahler, 240 W/cm, 100% Leistung ) in einer UV-Anlage mit 20 m/min Förderbandgeschwindigkeit gehärtet.

Die einzelnen Beispiele und Ergebnisse sind in den nachfolgenden Tabellen 1 und 2 aufgeführt (Mengen in Gewichtsteilen).

**Tabelle1:**

| Rohstoff \ Beispiel | | 1 | 2 | 3 | 4 | 5 | 6 | 7 | 8 | 9 |
|---|---|---|---|---|---|---|---|---|---|---|
| 1 | Aliphatisches Epoxyacrylat | 61,9 | - | - | - | - | - | - | - | - |
| 2 | Aliphatisches hexafunktionelles Urethanacrylat M_{W} 1000 | - | 56,9 | 56,9 | 56,9 | - | 34,0 | 56,9 | 31,5 | 31,6 |
| 3 | Aromatisches Epoxydiacrylat M_{W} 460 | - | - | - | - | 80,8 | 37,0 | - | 34,3 | 34,5 |
| 4 | Isobornylacrylat | 30,6 | 35,1 | 35,1 | 35,1 | - | 21,1 | 35,1 | 19,4 | 19,5 |
| 5 | Neopentylglykolpropoxylatdiacrylat | 20,0 | 20,0 | - | - | 10,0 | 2,1 | - | 2,0 | 2,0 |
| 6 | Vinyltrimethoxysilan | - | - | 5,0 | 15,0 | - | - | 5,0 | - | - |
| 7 | Bis-(gamma-trimethoxysilylpropyl)-amin | 10,0 | 10,0 | - | - | 4,2 | 1,0 | - | 0,9 | 0,8 |
| 8 | Saures Triacrylat (Säurezahl 150) | 2,5 | 3,0 | 3,0 | 3,0 | - | 1,8 | 3,0 | 1,7 | 17 |
| 9 | Phosphorsaures Acrylat (Säurezahl 300) | - | - | - | - | 3,0 | - | - | 2,8 | 2,8 |
| 10 | Fotoinitiator | 5,0 | 5,0 | 5,0 | 5,0 | 5,0 | 3,0 | 4,5 | 4,6 | 4,7 |
| 11 | Handelsübliches Biozid | - | - | - | - | - | - | 0,5 | - | - |
| 12 | Hydrophobe Kieselsäure | - | - | - | - | - | - | - | 2,8 | - |
| 13 | Nanoteiliges Al₂O₃ | | | | | | | | | 2,4 |

| | | | | | | | | | | |
|---|---|---|---|---|---|---|---|---|---|---|
| Fotointiator als 1,5:1 Gemisch aus 1-Hydroxy-1-methylethyl-phenylketon und 1-Hydroxy- cyclohexylphenylketon | | | | | | | | | | |

### Messmethoden:

1. Fingerprint: Es wurde ein Fingerabdruck auf das beschichtete Blech aufgebracht und optisch beurteilt. Dieser wurde ggf. mit einem weichen trockenen Tuch weggewischt.
2. Gitterschnitt gem. DIN 53151: Mit einem Cross-Hatch Cuttermesser (Erichsen Modell 295) wurden Gitterschnitte angebracht und mit einem Klebeband überklebt, danach abgerissen und beurteilt. Analog wurde das Überkleben und Abreißen auch nach einer Wasserdampfbelastung des Schnitts durchgeführt.
3. Anschmutzung: Das beschichtete Blech wurde mit den Prüfagenzien (schwarzer Tee, Zitronensaft, Senf, Ketchup, Mayonnaise) auf einer 5 cm² großen Fläche bedeckt und 1 Std. bei 60° C gelagert. Danach wurde das Blech mit Wasser abgespült und mit einem weichen Tuch getrocknet.
4. Lösemittelbeständigkeit: Einige Tropfen Lösemittel wurden auf das beschichtete Blech gegeben und nach etwa 5 sec. mit einem weichen Tuch entfernt. Das Aufquell- bzw. Anlöseverhalten des Überzugs wurde beurteilt.
5. Wasserdampftest: Das 90° abgewinkelte Blech wurde mit geringer Distanz über einen mit siedendem Wasser gefüllten Behälter gelegt und dort 2 Std. mit Dampf beaufschlagt.

In der nachfolgenden Tabelle 2 sind die Ergebnisse der Oberflächeneigenschaft sowie der Beständigkeitsuntersuchungen der erfindungsgemäßen Beschichtungen zusammengestellt. Die Oberflächeneigenschaften und die Kratzfestigkeit sind gut, die Empfindlichkeit gegen Fingerabdrücke sind bei allen erfindungsgemäßen Beschichtungen ebenfalls gut

**Tabelle2:**

| Beispiel. | Oberflächeneigenschaft | | | Beständigkeit gegen | | | | |
|---|---|---|---|---|---|---|---|---|
| | Fingerprints¹⁾ | Kratzfestigkeit⁶⁾ | Gitterschnitt²⁾ | Lebensmittel³⁾ | Milde Reiniger³⁾ | Starke Reiniger⁷⁾ | Lösemittel⁴⁾ | Wasserdampf⁵⁾ |
| 1 | + | + | 0(0) | 0 | 0 | + | nicht bestimmt | + |
| 2 | 0 | + | 0 (0) | + | + | + | nicht bestimmt | + |
| 3 | + | + | 0 (0) | + | + | + | nicht bestimmt | 0 |
| 4 | + | + | 0 (0) | + | + | 0 | + | 0 |
| 5 | + | + | 0 (0) | + | + | + | + | + |
| 6 | + | + | 0 (1) | + | + | + | + | + |
| 7 | + | + | 0 (0) | + | + | + | + | 0 |
| 8 | + | + | 0 (0) | + | + | + | + | + |
| 9 | + | + | 0(0) | + | + | + | + | + |

| | | | | | | | | |
|---|---|---|---|---|---|---|---|---|
| 1) optische Begutachtung von Fingerabdrücken (fingerprints) 2) Benotung gem. DIN 53151; nach Wasserdampfbelastung in Klammern 3) Lebensmittel: Senf, Tee, Mayonnaise, Ketchup, Zitronensaft etc., milde Reiniger: Allzweckreiniger, Spülmittel etc 4) Es wurde mit Aceton, Leichtbenzin und Ethanol untersucht. 5) Um 90° gewinkelte Prüfbleche wurden 2 h mit Wasserdampf behandelt und optisch begutachtet 6) bestimmt mit Härteprüfstab 318, Fa. Erichsen 7) Reiniger: Backofenreiniger, Ceranreiniger etc. | | | | | | | | |

### Beispiele 10-12

Mit dem Überzugsmittel aus dem Beispiel 9 wurden zusätzliche Substrate beschichtet und geprüft :

| **Beispiel** | **Substrat (gebürstet)** | **Schicht-Dicke** | **Optik** | **Reiniger** | **Fingerprint** |
|---|---|---|---|---|---|
| 10 | Messing (MS 39) | 5 µm | i.O. | + | + |
| 11 | AIMg1 | 5 µm | i.O. | + | + |
| 12 | Kupfer | 5 µm | i.O. | 0 | + |

## Patentansprüche

1. Überzugsmittel zum Beschichten von metallischen Substraten, das in einem Temperaturbereich von 0 bis 90°C eine Viskosität kleiner als 1000 mPas aufweist, enthaltend
a)40 bis 90 Gew.-% mindestens eines oligomeren linearen oder verzweigten Epoxy-, Polyester-, Polyether- und/oder Polyurethan-(Meth)acrylats,
b) 5 bis 60 Gew.-% mindestens einer monofunktionellen flüssigen (Meth)acrylat- oder di-, tri-, oder poly(Meth)acrylatverbindung,
c) 0,1 bis 20 Gew.-% mindestens einer saure Gruppen enthaltenden (Meth)acrylatverbindung, sowie
d) 0,1 bis 20 Gew.-% lacktechnische Hilfsstoffe wie Haftvermittler, Verlaufsmittel, Entschäumer und/oder Lichtschutzmittel, sowie Fotoinitiatoren,
wobei als Komponente d) zusätzlich mikronisierte Füllstoffe ausgewählt aus Kieselsäure, Aluminiumoxid, Titandioxid und Bariumsulfat enthalten sind.

2. Überzugsmittel nach Anspruch 1, **dadurch gekennzeichnet, dass** das Mittel zusätzlich 0 bis 20 Gew.-% Di- oder Tri-Alkoxysilane mit weiteren organofunktionellen Gruppen enthält.

3. Überzugsmittel nach Anspruch 1 oder 2, enthaltend als Komponente c) phosphorsaure oder phosphonsaure (Meth)acrylatverbindungen.

4. Überzugsmittel nach Anspruch 1 bis 3, enthaltend zusätzlich Pigmente und/oder Farbstoffe.

5. Überzugsmittel nach Anspruch 1 bis 4, enthaltend zusätzlich ein biozid wirkendes Mittel.

6. Verfahren zum Beschichten einer Metalloberfläche mit einem Überzugsmittel nach Anspruch 1, **dadurch gekennzeichnet, dass**
a)die Oberfläche gegebenenfalls gereinigt und entfettet wird,
b)ein Überzugsmittel in einer Schichtdicke zwischen 0,5 bis 20 µm aufgetragen wird, und
c) der Überzug danach mittels energiereicher Strahlung vernetzt wird.

7. Verfahren nach Anspruch 6, **dadurch gekennzeichnet, dass** als metallische Oberfläche ein Material auf Basis von Eisenwerkstoffen, Stahl und legiertem Stahl, Leichtmetallen, Buntmetallen oder Edelmetallen ausgewählt wird.

8. Verfahren nach Anspruch 7, **dadurch gekennzeichnet, dass** als energiereiche Strahlung UV-Strahlung angewendet wird mit einer Wellenlänge von 150 bis 800 nm.

9. Verfahren nach Anspruch 6, **dadurch gekennzeichnet, dass** das Überzugsmittel mit weniger als 10 µm Trockenschichtdicke aufgetragen wird.

10. Verfahren nach Anspruch 6 bis 9, **dadurch gekennzeichnet, dass** das Überzugsmittel durch Fluten, Abquetschen, Walzenauftrag, Abstreifer, airless, air-assisted oder elektrostatisches Spritzen aufgetragen wird.

11. Verfahren nach Anspruch 10, **dadurch gekennzeichnet, dass** das Substrat bandförmig ist und durch Walzenauftragsverfahren beschichtet wird.

12. Verfahren nach Anspruch 6 bis 11, **dadurch gekennzeichnet, dass** sich das beschichtete Substrat bei der Vernetzung in einer sauerstoffarmen oder - freien Atmosphäre befindet.

13. Verfahren nach Anspruch 6 bis 12, **dadurch gekennzeichnet, dass** nach der Applikation des Überzugsmittels eine Folie aufgebracht wird und danach das Überzugsmittel vernetzt wird.

14. Verfahren nach Anspruch 13, **dadurch gekennzeichnet, dass** die Folie aus Polyethylen, Polypropylen, PET oder Gemischen davon besteht und abtrennbar von der ausgehärteten Beschichtung ist.

15. Verfahren nach Anspruch 6 bis 14, **dadurch gekennzeichnet, dass** das Substrat nach der Beschichtung mechanisch in eine andere Form gebracht wird.

16. Verfahren nach Anspruch 6 bis 15, **dadurch gekennzeichnet, dass** nach dem Reinigen keine Primer- oder Vorbehandlungsschicht auf das Substrat aufgetragen wird.

17. Verwendung eines Beschichtungsmittels nach einem oder mehreren der Ansprüche 1 bis 5 zur Erstellung von dünnen, reinigungsfesten Beschichtungen für metallische Oberflächen.

18. Verwendung nach Anspruch 17, **dadurch gekennzeichnet, dass** Siliziumdioxid und / oder Aluminiumoxid als Pigment im Überzugsmittel enthalten ist.

19. Gegenstand beschichtet gemäß Anspruch 6 zur Verwendung im Architekturbereich, beim innenausbau von Gebäuden, im Möbelbau sowie für Schmuckanwendungen oder von Geräten für den Haushaltsbereich.

20. Gegenstand beschichtet gemäß Anspruch 6 zur Verwendung zur Herstellung von Maschinen und Geräten sowie zur Verkleidung von Wänden, Decken und Fußböden für den Haushalts-, Sanitär- und Klinikbereich sowie für die Lebensmittel verarbeitende oder pharmazeutische Industrie.

## Claims

1. A coating agent for coating metal substrates, which has a viscosity less than 1,000 mPa.s in a temperature range from 0 to 90°C, containing
a) 40 to 90% by weight of at least one oligomeric linear or branched epoxy, polyester, polyether and/or polyurethane (meth)acrylate,
b) 5 to 60% by weight of at least one monofunctional liquid (meth)acrylate or di-, tri- or poly-(meth)acrylate compound,
c) 0.1 to 20% by weight of at least one (meth)acrylate compound containing acid groups, as well as,
d) 0.1 to 20% by weight of paint technology adjuvants such as bonding agents, leveling agents, anti-foam agents, and/or light stabilizers, as well as photoinitiators,
wherein micronized fillers as component d) are further selected from silicic acid, aluminium oxide, titanium dioxide and barium sulfate.

2. The coating agent according to claim 1, **characterized in that** the agent further contains 0 to 20% by weight of di- or tri-alcoxysilanes with further organofunctional groups.

3. The coating agent according to claim 1 or 2, containing phosphoric acid or phosphonic acid (meth)acrylate compounds as component c).

4. The coating agent according to claims 1 to 3, further containing pigments and/or dyes.

5. The coating agent according to claims 1 to 4, further containing an agent with a biocidal effect.

6. A method for coating a metal surface with a coating agent according to claim 1, **characterized in that**
a) the surface is, if necessary, cleaned and degreased,
b) a coating agent is applied in a layer thickness comprised between 0.5 to 20 µm, and
c) the coating is subsequently cross-linked by means of radiation rich in energy.

7. The method according to claim 6, **characterized in that** a material based on ferrous products, steel and alloyed steel, light metals, non-ferrous metals or noble metals is selected as a metal surface.

8. The method according to claim 7, **characterized in that** as a radiation rich in energy, UV radiation is applied with a wavelength from 150 to 800 nm.

9. The method according to claim 6, **characterized in that** the coating agent is applied with a dry layer thickness less than 10 µm.

10. The method according to claims 6 to 9, **characterized in that** the coating agent is applied by flooding, squeeze-roll coating, kiss-roll coating, wiping, airless, air-assisted or electrostatic spraying.

11. The method according to claim 10, **characterized in that** the substrate has a strip form and is coated by a kiss-roll coating method.

12. The method according to claims 6 to 11, **characterized in that** the coated substrate for cross-linking is found in a low-oxygen or free atmosphere.

13. The method according to claims 6 to 12, **characterized in that** after applying the coating agent, a sheet is applied and the coating agent is subsequently cross-linked.

14. The method according to claim 13, **characterized in that** the sheet consists of polyethylene, polypropylene, PET or mixtures thereof, and is separable from the hardened coating.

15. The method according to claims 6 to 14, **characterized in that** the substrate after the coating is mechanically brought into another form.

16. The method according to claims 6 to 15, **characterized in that** after cleaning, no primer or pre-treatment layer is applied on the substrate.

17. The use of a coating agent according to one or several of claims 1 to 5, for preparing thin cleaning-resistant coatings for metal surfaces.

18. The use according to claim 17, **characterized in that** silicon dioxide and/or aluminium oxide are contained as a pigment in the coating agent.

19. An object coated according to claim 6 for use in the field of architecture, indoor fittings of buildings, furniture making as well as for jewelry applications or appliances for the domestic field.

20. An object coated according to claim 6, to be used for manufacturing machines and appliances as well as for cladding walls, ceilings and floors for the domestic, sanitary and clinical field as well as for the pharmaceutical or food processing industry.

## Revendications

1. Agent de revêtement pour le revêtement de substrats métalliques, qui présente, dans une plage de températures de 0 à 90 °C, une viscosité inférieure à 1000 mPa.s, contenant
a) à concurrence de 40 à 90 % en poids, au moins un époxy(méth)acrylate, un polyester(méth)acrylate, un polyéther-(méth)acrylate et/ou un polyuréthane(méth)acrylate oligomère linéaire ou ramifié,
b) à concurrence de 5 à 60 % en poids, au moins un composé liquide de (méth)acrylate monofonctionnel ou bien de di(méth)acrylate, de tri(méth)acrylate ou de poly(méth)acrylate,
c) à concurrence de 0,1 à 20 % en poids, au moins un composé de (méth)acrylate contenant des groupes acides, ainsi que
d) à concurrence de 0,1 à 20 % en poids, des adjuvants pour la technique des laques, des vernis ou des peintures, tels que des agents favorisant l'adhérence, des agents de nivellement, des agents anti-mousse et/ou des agents de protection contre l'effet de la lumière, ainsi que des photoinitiateurs,
dans lequel, à titre de composant d), sont contenues en outre des substances de charge micronisées choisies parmi l'acide silicique, l'oxyde d'aluminium, le dioxyde de titane et le sulfate de baryum.

2. Agent de revêtement selon la revendication 1, **caractérisé en ce que** l'agent contient en outre, à concurrence de 0 à 20 % en poids, des dialcoxysilanes ou des trialcoxysilanes possédant des groupes organofonctionnels supplémentaires.

3. Agent de revêtement selon la revendication 1 ou 2, contenant, à titre de composant c), des composés de (méth)acrylate contenant de l'acide phosphorique ou de l'acide phosphonique.

4. Agent de revêtement selon les revendications 1 à 3, contenant en outre des pigments et/ou des colorants.

5. Agent de revêtement selon les revendications 1 à 4, contenant en outre un agent ayant un effet biocide.

6. Procédé pour le revêtement d'une surface métallique avec un agent de revêtement selon la revendication 1, **caractérisé en ce que**
a) le cas échéant, on nettoie et on dégraisse la surface ;
b) on applique un agent de revêtement avec une épaisseur de couche entre 0,5 et 20 µm ; et
c) on soumet ensuite le revêtement à une réticulation par exposition avec un rayonnement riche en énergie.

7. Procédé selon la revendication 6, **caractérisé en ce qu'**on choisit, comme surface métallique, une matière à base de matériaux ferreux, d'acier et d'acier allié, des métaux légers, des métaux non-ferreux ou des métaux nobles.

8. Procédé selon la revendication 7, **caractérisé en ce qu'**on utilise, à titre de rayonnement riche en énergie, un rayonnement UV avec une longueur d'onde de 150 à 800 nm.

9. Procédé selon la revendication 6, **caractérisé en ce qu'**on applique l'agent de revêtement avec une épaisseur de couche à l'état sec inférieure à 10 µm.

10. Procédé selon les revendications 6 à 9, **caractérisé en ce qu'**on applique l'agent de revêtement par noyage, par écrasement, par application au rouleau, par raclage, par pulvérisation sans air, assistée par air ou électrostatique.

11. Procédé selon la revendication 10, **caractérisé en ce que** le substrat est en forme de ruban et est revêtu via un procédé d'application au rouleau.

12. Procédé selon les revendications 6 à 11, **caractérisé en ce que** le substrat revêtu se trouve, lors de la réticulation, dans une atmosphère pauvre en oxygène ou exempte d'oxygène.

13. Procédé selon les revendications 6 à 12, **caractérisé en ce que**, après l'application de l'agent de revêtement, on applique une feuille mince et on soumet ensuite l'agent de revêtement à une réticulation.

14. Procédé selon la revendication 13, **caractérisé en ce que** la feuille mince est constituée de polyéthylène, de polypropylène, de PET ou de leurs mélanges, et peut être séparée du revêtement durci.

15. Procédé selon les revendications 6 à 14, **caractérisé en ce que** le substrat, après le revêtement, peut être façonné mécaniquement pour prendre une autre forme.

16. Procédé selon les revendications 6 à 15, **caractérisé en ce que**, après le nettoyage, on n'applique aucune couche de fond ou de prétraitement sur le substrat.

17. Utilisation d'un agent de revêtement selon une ou plusieurs des revendications 1 à 5 pour la fabrication de revêtements minces, résistant au nettoyage, pour des surfaces métalliques.

18. Utilisation selon la revendication 17, **caractérisé en ce que** l'agent de revêtement contient du dioxyde de silicium et/ou de l'oxyde d'aluminium à titre de pigment.

19. Objet revêtu selon la revendication 6, à utiliser dans le domaine de l'architecture, dans l'aménagement intérieur des bâtiments, dans le mobilier, ainsi que pour des applications dans le domaine de la joaillerie ou pour des appareils à usage domestique.

20. Objet revêtu selon la revendication 6, à utiliser pour la fabrication de machines et d'appareils, ainsi que pour le revêtement de murs, de plafonds et de sols pour l'usage domestique, sanitaire et clinique, ainsi que pour l'industrie de traitement des aliments ou l'industrie pharmaceutique.
